(19) Europäisches Patentamt

European Patent Office

Office européen des brevets

(11) **EP 0 578 939 B1**

(12) **EUROPÄISCHE PATENTSCHRIFT**

(45) Veröffentlichungstag und Bekanntmachung des Hinweises auf die Patenterteilung:
**06.11.1996 Patentblatt 1996/45**

(51) Int. Cl.⁶: **B24B 41/04**, B23Q 11/00, F16F 15/22, G01M 1/36

(21) Anmeldenummer: **93107360.5**

(22) Anmeldetag: **06.05.1993**

(54) **Vorrichtung zum Unwuchtausgleich einer um eine Rotationsachse drehbaren Schleifscheibe**

Device for balancing a grinding disc rotating around an axis

Dispositif pour équilibrer une meule en rotation autour d'un axe

(84) Benannte Vertragsstaaten:
**ES FR GB IT**

(30) Priorität: **09.07.1992 DE 4222535**

(43) Veröffentlichungstag der Anmeldung:
**19.01.1994 Patentblatt 1994/03**

(73) Patentinhaber: **HOFMANN MASCHINENBAU GmbH**
**W-6102 Pfungstadt (DE)**

(72) Erfinder: **Lulay, Eugen**
**W-6140 Bensheim (DE)**

(74) Vertreter: **Nöth, Heinz, Dipl.-Phys.**
**Patentanwalt,**
**Mozartstrasse 17**
**80336 München (DE)**

(56) Entgegenhaltungen:
**EP-A- 0 044 825**    **EP-A- 0 409 050**
**EP-A- 0 409 462**    **EP-A- 0 460 282**
**US-A- 3 827 193**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zum Unwuchtausgleich einer um eine Rotationsachse drehbaren Schleifscheibe mit Ausgleichsgewichten, die bezüglich einer zur Rotationsachse senkrechten Schleifscheibenmittelebene mit symmetrischer Masseverteilung um die Rotationsachse drehbar an einem mit der Schleifscheibe rotierenden Gehäuse gelagert sind, und einer Positioniereinrichtung für unterschiedliche Winkelpositionierungen der Ausgleichsgewichte.

Bei einer derartigen aus der EP 0 409 050 A2 bekannten Vorrichtung sind um die Rotationsachse der Schleifscheibe zwei Ausgleichsgewichte auf gleichen Radien in verschiedenen Winkelpositionierungen für einen Unwuchtausgleich der Schleifscheibe einstellbar. Die Schwerpunkte der Ausgleichsgewichte bewegen sich bei der Positionierung in verschiedene Winkelstellungen in der Schleifscheibenmittelebene, d.h. die beiden Ausgleichsgewichte haben symmetrische Massenverteilung bezüglich der Schleifscheibenmittelebene, die senkrecht zur Rotationsachse der Schleifscheibe liegt. Hierdurch wird gegenüber Schleifscheibenauswuchtsystemen, bei denen die Schwerpunkte der Ausgleichsgewichte in unterschiedlichen Ebenen sich bewegen, ein momentfreies Auswuchtsystem erzielt. Hierzu werden die Ausgleichsmassen, welche in Form von Hohlzylindersegmenten (Viertelzylinderschalen) ausgebildet sind, auf einem gleichen Radius um die Rotationsachse bewegt.

Aufgabe der Erfindung ist es, eine Vorrichtung der eingangs genannten Art zu schaffen, bei welcher die Massen der Ausgleichsgewichte um die Rotationsachse gleichförmig verteilt sind.

Diese Aufgabe wird erfindungsgemäß dadurch gelöst, daß die Ausgleichsgewichte auf unterschiedlichen Radien um 360° um die Rotationsachse drehbar und aneinander vorbeibewegbar sind, wobei das Produkt aus Masse des jeweiligen Ausgleichsgewichts und dem zugeordneten Radius für die Ausgleichsgewichte gleich groß ist.

Bevorzugt besitzen die Ausgleichsgewichte die Form von Halbschalen, welche bei ihren Drehungen um 360° um die Rotationsachse aneinander vorbei bewegbar sind. Das Ausgleichsgewicht mit der größeren Masse liegt auf dem inneren Radius und das Ausgleichsgewicht mit der kleineren Masse auf dem äußeren Radius.

Ein kompakter Aufbau unter Verwendung einer geringen Anzahl an Einzelbauteilen wird dadurch erzielt, daß die Positioniereinrichtung zwei elektrische Stellmotore aufweist, die um die Rotationsachse angeordnet sind, wobei die Motorwellen der beiden Stellmotore innen und auf der Rotationsachse liegen und aufeinander zugerichtet sind. Die elektrischen Anschlüsse der beiden Stellmotore können für eine leichte Zugänglichkeit hierbei außen liegen. Jedes der beiden Ausgleichsgewichte ist auf einer um die Rotationsachse drehbaren Lagerbuchse befestigt, die sich über die gesamte axiale Länge eines jeweiligen Stellmotors erstreckt, wobei über innenliegende Mitnehmer, die drehfest mit den Motorwellen verbunden sind, die Drehbewegung der Stellmotore mit einfachen Mitteln, ohne daß hierzu zusätzliche Getriebe (Zahnräder und dergl.) erforderlich sind, übertragen wird. Als Mitnehmermittel genügt jeweils ein einfacher Stift, mit welchem die drehfeste Verbindung mit der Lagerbuchse hergestellt wird. Es kann auch eine Keilverzahnung oder ähnliches zum Einsatz kommen.

Die beiden Stellmotore sind an gehäusefesten Lagerbuchsen befestigt, wobei die drehbaren Lagerbuchsen für die Ausgleichsgewichte auf diesen beiden gehäusefesten Lagerbuchsen drehbar gelagert sein können.

Während bei der bekannten Vorrichtung nach der EP 0 409 050 A2 jeweils zwei Lagerbuchsen bzw. Lagerringe mit den Innenflächen der Ausgleichsgewichte verbunden sind, können bei einer Ausführungsform die Ausgleichsgewichte an außenliegenden Flanschen der jeweils zugeordneten Lagerbuchsen befestigt sein.

Es ist ferner möglich, das jeweils andere stirnseitige Ende des Ausgleichsgewichts zusätzlich am jeweils anderen Ausgleichsgewicht drehbar zu lagern. Hierfür kann ein zusätzlicher außenliegender, mit dem stirnseitigen Ende der Lagerbuchse verbundener Lagerring jeweils vorgesehen sein.

Es ist jedoch auch möglich, anstelle eines Gehäuses, welches die Stellmotore und die Ausgleichsgewichte umfaßt und an welches die Schleifscheibe angeflanscht werden kann, eine durchgehende zylindrische Halterung, in deren Innenraum die beiden Stellmotore angeordnet sind, zu verwenden. Die zylindrische Halterung dient als Verbindungsmittel für zwei stirnseitige Lagerplatten, wobei die eine der beiden Lagerplatten beispielsweise durch Anflanschen mit der Schleifscheibe verbunden sein kann. Die drehbaren Lagerbuchsen, welche mit den Ausgleichsgewichten verbunden sind, sind auf der Außenseite (Mantelfläche) der zylindrischen Halterung gelagert. Die zusammenmontierte Anordnung kann dann in einer Mittenbohrung der Schleifscheibe angeordnet sein. Der von den Motorwellen vermittelte Drehantrieb kann über ein Zahnradgetriebe auf die drehbaren Lagerbuchsen übertragen werden.

Anhand der Figuren wird an Ausführungsbeispielen die Erfindung noch näher erläutert. Es zeigt:

Fig. 1    eine schnittbildliche Darstellung der beiden Ausgleichsgewichte eines ersten Ausführungsbeispiels;

Fig. 2    einen Längsschnitt durch das erste Ausführungsbeispiel;

Fig. 3    eine schnittbildliche Darstellung der beiden Ausgleichsgewichte eines zweiten Ausführungsbeispiels;

Fig. 4       einen Längsschnitt durch das zweite Ausführungsbeispiel; und

Fig. 5       einen Längsschnitt eines dritten Ausführungsbeispiels.

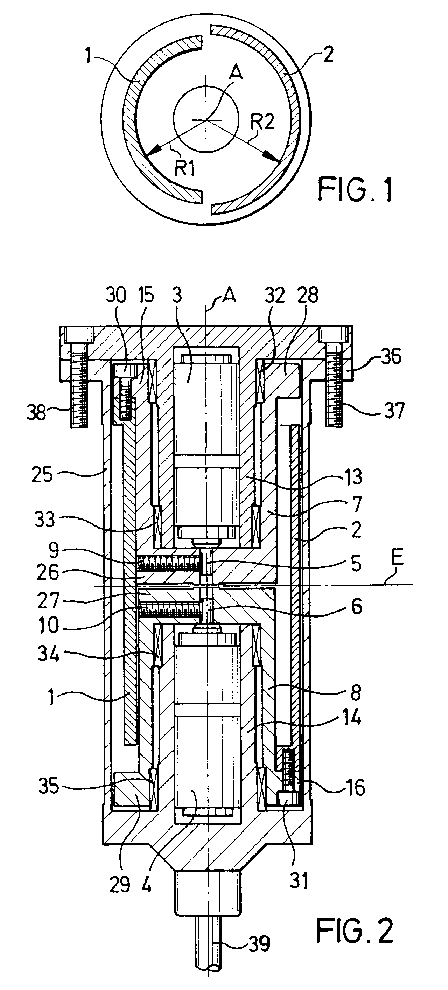

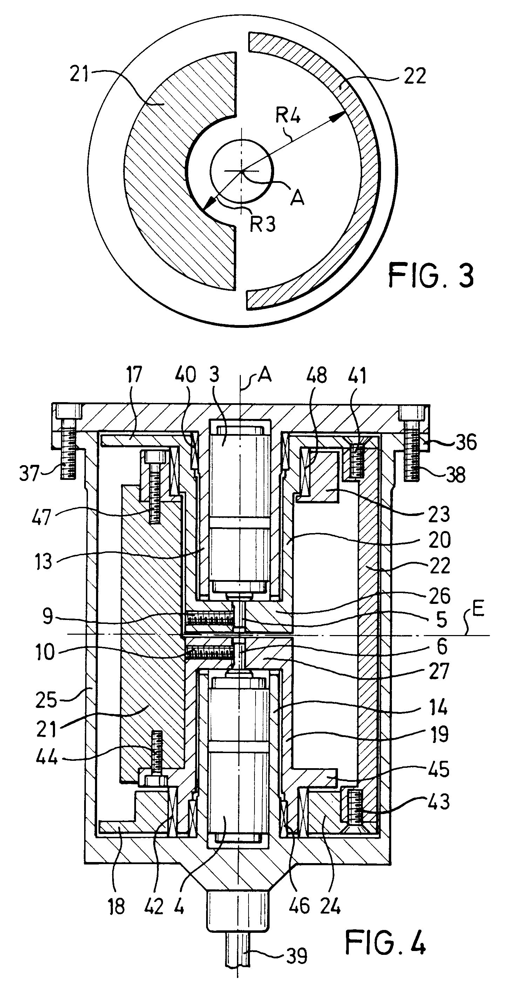

Bei den beiden Ausführungsbeispielen sind Zwei Ausgleichsgewichte 1 und 2 (Fig. 1 und 2) bzw. 21 und 22 (Fig. 3 und 4) vorgesehen. Die beiden Ausgleichsgewichte werden auf unterschiedlichen Führungsradien R1 und R2 (Fig. 1 und 2) bzw. R3 und R4 (Fig. 3 und 4) in kreisförmigen Führungsbahnen um eine Rotationsachse A der nicht näher dargestellten Schleifscheibe geführt.

Die Ausgleichsgewichte 1 und 2 bzw. 21 und 22 sind als Zylinderhalbschalen ausgebildet. Das auf dem inneren Radius R1 bzw. R3 geführte Ausgleichsgewicht 1 bzw. 21 besitzt gegenüber dem auf dem äußeren Kreis R2 bsw. R4 geführten Ausgleichsgewicht 2 bzw. 22 die größere Masse. In beiden Ausführungsbeispielen sind die Massen der Ausgleichsgewichte und die Radien in der Weise aufeinander abgestimmt, daß M1 x R1 = M2 x R2  bzw.  M21 x R3 = M22 x R4  ist, wobei M1 die Masse des Ausgleichsgewichts 1, M2 die Masse des Ausgleichsgewichts 2, M21 die Masse des Ausgleichsgewichts 21 und M22 die Masse des Ausgleichsgewichts 22 ist. Die jeweils beiden Ausgleichsgewichte 1, 2 bzw. 21, 22 können jeweils um 360° um die Rotationsachse A gedreht werden. Die hierfür verwendeten Führungsmittel und Antriebsmittel sind in den Figuren 2 bzw. 4 dargestellt.

Für den Antrieb bei der Positionierung der Ausgleichsgewichte dienen elektrische Stellmotore 3 und 4. Die elektrischen Stellmotore sind am Gehäuse 25, welches zylindrisch ausgebildet sein kann, mittels ortsfesten Lagerbuchsen 13 und 14 gelagert. Die beiden ebenfalls in zylindrischen Gehäusen angeordneten Stellmotore 3 und 4 liegen koaxial zur Rotationsachse A. Ihre beiden Motorwellen 5 und 6 liegen ebenfalls konzentrisch zur Rotationsachse A und sind aufeinander zu gerichtet. Jeweilige um die ortsfest angeordneten Stellmotore 3 und 4 bzw. um die ortsfesten Lagerbuchsen 13 und 14 drehbare Lagerbuchsen 7, 8 (Ausführungsbeispiel der Fig. 1 und 2) bzw. 19, 20 (Ausführungsbeispiel der Fig. 3 und 4) sind drehfest und direkt über Mitnehmerstife 9 und 10 drehfest mit den Motorwellen 5 und 6 verbunden. Die drehbaren Lagerbuchsen 7,8 bzw. 19, 20 für die Ausgleichsgewichte 1, 2 bzw. 21, 22 besitzen innere Flansche 26, 27, die über die Mitnehmerstifte 9 und 10 drehfest mit den Motorwellen 5 und 6 verbunden sind. Die Motorwellen 5 und 6 können auch keilversahnt oder sonstwie fest mit den Lagerbuchsen 7, 8 bzw. 19, 20 verbunden sein.

Beim Ausführungsbeispiel der Figuren 1 und 2 ist das Ausgleichsgewicht 1 mit der vom Stellmotor 3 angetriebenen Lagerbuchse 7 verbunden. Das Ausgleichsgewicht 2 ist mit der drehbaren Lagerbuchse 8, welche vom Stellmotor 4 angetrieben wird, verbunden. Die Verbindung der beiden Ausgleichsgewichte 1 und 2 mit den Lagerbuchsen 7 und 8 erfolgt über außenliegende stirnseitige Flansche 28 und 29. Mittels Schrauben 30 und 31 sind die Ausgleichsgewichte 1 und 2 mit den Flanschen 30 und 31 verbunden. Hierbei liegt der Flansch 28 der einen drehbaren Lagerbuchse 7 an der einen Stirnseite der Anordnung und der Flansch 29 der anderen drehbaren Lagerbuchse 8 an der anderen Stirnseite der Anordnung. Die drehbaren Lagerbuchsen 7 und 8 sind mittels Wälzlager 32, 33 und 34, 35 auf den fest mit dem Gehäuse bzw. einstückig mit dem Gehäuse 25 verbundenen Lagerbuchsen 13 und 14 drehbar gelagert. Das Gehäuse 25 besitzt an einer Stirnseite einen Befestigungsflansch 36, min welchem mittels Schraubenbolzen 37, 38 eine nicht näher dargestellte Schleifscheibe verbunden werden kann. Die Stromversorgung der Stellmotore 3 und 4 erfolgt über eine koaxial geführte elektrische Zuleitung 39.

Auch beim Ausführungsbeispiel der Figuren 3 und 4 besitzt das Gehäuse 25 den Befestigungsflansch 36, an welchem mittels Schraubenbolzen 37 und 38 die nicht näher dargestellte Schleifscheibe befestigt wird, und der Antrieb der Stellmotore 3 und 4 erfolgt über die elektrische Zuleitung 39. Bei den in den Figuren 1 bis 4 dargestellten Ausführungsbeispielen ist die Anordnung der einzelnen Bauteile und der Ausgleichsgewichte so, daß beim Verstellen der Ausgleichsgewichte für einen Unwuchtausgleich an der Schleifscheibe der Schwerpunkt der Gesamtanordnung auf der Schleifscheibenmittelebene E wandert. Die Anordnung der Massen der einzelnen Bauteile im Gehäuse ist so, daß je nach Lage der auszugleichenden Unwucht der Schwerpunkt dieser Massen eine bestimmte der Unwuchtwinkellage gegenüber liegende Winkellage in der Ebene E einnimmt.

Beim Ausführungsbeispiel der Figuren 3 und 4 wird die Lagerbuchse 20, mit welcher das äußere und leichtere Ausgleichsgewicht 22 verbunden ist, mittels eines Wälzlagers 40 an der ortsfesten Lagerbuchse 13 drehbar gelagert. Das Lager 40 befindet sich an einer Stirnseite der Gesamtanordnung. Die Lagerbuchse 20 besitzt einen äußeren Flansch 17, mit welchem mit Hilfe von Schrauben 41 das Ausgleichsgewicht 22 an der einen Stirnseite fest verbunden ist. An der anderen Stirnseite ist das Ausgleichsgewicht 22 mit Schrauben 43 mit einer weiteren Lagerbuchse 24 verbunden. Die ringförmig ausgebildete Lagerbuchse 24 stützt sich über ein Wälzlager 42 außen an der Lagerbuchse 19, mit welcher das andere Ausgleichsgewicht 21 verbunden ist, ab. Auf diese Weise ist das Ausgleichsgewicht 22 an seinen beiden Stirnseiten im Gehäuse an den beiden festen Lagerbuchsen 13 und 14 abgestützt, wobei die Abstützung an der Lagerbuchse 14 über die drehbare Lagerbuchse 19 für das Ausgleichsgewicht 21 mit der größeren Masse erfolgt.

In gleicher Weise ist das Ausgleichsgewicht 21 an seiner einen Stirnseite mittels Schrauben 44 mit einem äußeren Lagerflansch 45 der Lagerhülse 19 verbunden. Die Lagerhülse 19 ist drehbar gelagert mit Hilfe eines Wälzlagers 46 an der ortsfesten Lagerbuchse 14, an welcher auch der Stellmotor 4 innen befestigt ist. An der anderen Stirnseite ist das Ausgleichsgewicht 21 mit Schrauben 47 mit einer zusätzlichen drehbaren Lagerbuchse 23 verbunden. Die zusätzliche drehbare Lagerbuchse ist über ein Wälzlager 48 außen an der drehbaren Lagerbuchse 20 für das andere Ausgleichsgewicht 22 gelagert. Auf diese Weise wird auch das Ausgleichsgewicht 21 an den beiden konzentrisch um die Rotationsachse A angeordneten zylindrischen ortsfesten Lagerbuchsen 13 und 14 wie das Ausgleichsgewicht 22 gelagert, wobei die Lagerung an der ortsfesten Lagerbuchse 13 über die drehbare Lagerbuchse 20 für das andere Ausgleichsgewicht 22 erfolgt. Bei den beiden Wälzlagern 40, 46, welche die drehbaren Lagerbuchsen 20 und 19 an den ortsfesten zylindrischen Lagerbuchsen 13 und 14 abstützen, handelt es sich um innenliegende Lager, und bei den beiden Wälzlagern 48 und 42, welche die zusätzlichen Lagerbuchsen 23 und 24 an den drehbaren Lagerbuchsen 20 und 19 abstützen, handelt es sich bezüglich der Wälzlager 40 und 46 um außenliegende Wälzlager. Auf diese Weise erreicht man für die beiden Ausgleichsgewichte 21 und 22 stirnseitige Drehlager, die eine Abstützung des jeweils einen Ausgleichsgewichts über die Lagerbuchse des anderen Ausgleichsgewichts an den ortsfesten Lagerbuchsen 13 und 14 gewährleisten.

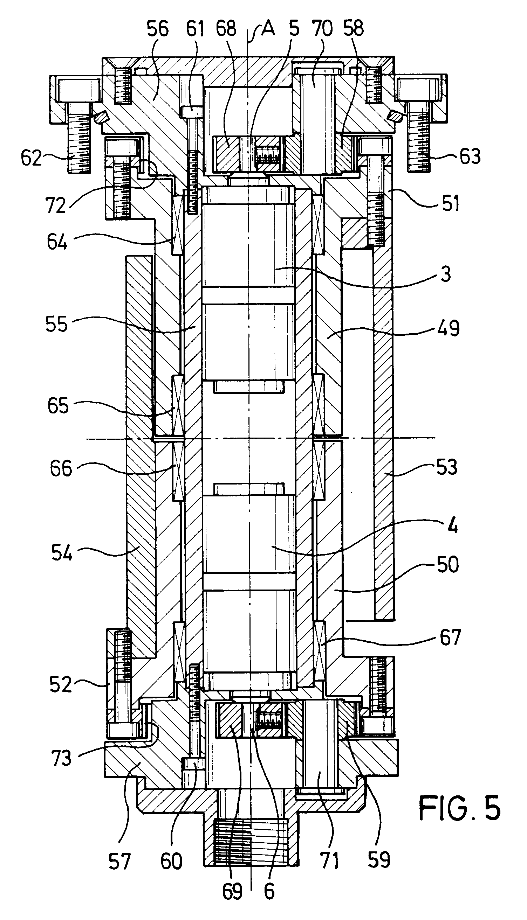

Bei der in der Figur 5 dargestellten Ausführungsform sind die beiden Stellmotore 3 und 4 in einer gemeinsamen zylindrischen Halterung (Lagerhülse 55) angeordnet. Die zylindrische Halterung 55 dient ferner zum Verbinden von stirnseitigen Lagerplatten 56 und 57 an den beiden Enden der zylindrischen Halterung 55. Die stirnseitigen Lagerplatten 56 und 57 sind mit der zylindrischen Halterung mittels Schrauben 60, 61 drehfest verbunden. Die nicht näher dargestellte Schleifscheibe kann mittels weiterer Schrauben 62, 63 mit der aus den beiden Lagerplatten 56, 57 und der verbindenden zylindrischen Halterung 55 bestehenden Verbundkonstruktion drehfest verbunden sein.

Ausgleichsgewichte 53 und 54 sind ebenfalls als Zylinderhalbschalen wie bei den beiden vorherigen Ausführungsbeispielen ausgebildet. Das Ausgleichsgewicht 53 ist durch Schrauben mit einer drehbaren Lagerbuchse 49 verbunden. Die drehbare Lagerbuchse 49 ist auf der Mantelfläche der zylindrischen Halterung 55 mittels Wälzlager 64, 65 drehbar gelagert. Das Ausgleichsgewicht 54 ist mit einer drehbaren Lagerbuchse 50 verbunden. Die Lagerbuchse 50 ist drehbar auf der Mantelfläche der zylindrischen Halterung 55 mittels Wälzlager 66, 67 gelagert.

Zur Übertragung der Antriebsdrehbewegung der Motorwellen 5 und 6 auf die drehbaren Lagerbuchsen 49 und 50 dient ein Zahnradgetriebe. Das Zahnradgetriebe besitzt mit den Motorwellen 5, 6 drehfest beispielsweise mittels Kerbverzahnung oder anderer Mitnehmermittel verbundene Zahnräder 68, 69. Diese Zahnräder kämmen mit Zahnrädern 58, 59, die mittels Lagerbolzen 70, 71 an den stirnseitigen Lagerplatten 56, 57 gelagert sind. Die Zahnräder 58 und 59 kämmen mit jeweiligen Innenzahnkränzen 72 und 73 an den Lagerbuchsen 49 und 50. Die aus den jeweiligen Zahnrädern und den Innenzahnkränzen bestehenden Zahnradgetriebe sind wie einfache Planetengetriebe ausgebildet. Wie die Darstellung der Figur 5 zeigt, ist in jeder Stirnseite der Anordnung ein Zahnradgetriebe vorgesehen. Die Lagerplatten 56, 57 können auch ringförmig ausgebildet sein, wie es die Figur 5 zeigt.

**Patentansprüche**

1. Vorrichtung zum Unwuchtausgleich einer um eine Rotationsachse drehbaren Schleifscheibe mit Ausgleichsgewichten, die bezüglich einer zur Rotationsachse senkrechten Schleifscheibenmittelebene mit symmetrischer Massenverteilung um die Rotationsachse drehbar an einem mit der Schleifscheibe rotierenden Gehäuse gelagert sind, und einer Positioniereinrichtung für unterschiedliche Winkelpositionierungen der Ausgleichsgewichte,
**dadurch gekennzeichnet,**
daß die Ausgleichsgewichte (1, 2; 21, 22; 53, 54) auf unterschiedlichen Radien (R1, R2; R3, R4) um 360° um die Rotationsachse (A) drehbar und aneinander vorbeibewegbar sind, wobei das Produkt aus Masse des jeweiligen Ausgleichsgewichts und zugeordnetem Radius für die Ausgleichsgewichte gleich groß ist.

2. Vorrichtung nach Anspruch 1, dadurch gekennzeichnet, daß die Ausgleichsgewichte (1, 2; 21, 22; 53, 54) die Form von Zylinderhalbschalen haben.

3. Vorrichtung nach Anspruch 1 oder 2, dadurch gekennzeichnet, daß die Positioniereinrichtung zwei elektrische um die Rotationsachse (A) angeordnete Stellmotore (3, 4) aufweist und daß die Ausgleichsgewichte (1, 2; 21, 22) an drehbaren Lagerbuchsen (7, 8; 19, 20; 49, 50) gelagert sind, die sich über die gesamte axiale Länge eines jeweiligen Stellmotors erstrecken und mit den Motorwellen (5, 6) in Antriebsverbindung sind.

4. Vorrichtung nach einem der Ansprüche 1 bis 3, dadurch gekennzeichnet, daß jeder Stellmotor (3, 4) an einer zugeordneten gehäusefesten Lagerbuchse (13, 14) befestigt ist.

5. Vorrichtung nach einem der Ansprüche 1 bis 4, dadurch gekennzeichnet, daß die drehbare Lagerbuchse (7; 19) für das eine Ausgleichsgewicht (1; 21) auf der einen gehäusefesten Lagerbuchse (13) und die andere drehbare Lagerbuchse (8; 20) für das andere Ausgleichsgewicht (2; 22) an der anderen gehäusefesten Lagerbuchse (14) drehbar gelagert sind.

6. Vorrichtung nach einem der Ansprüche 1 bis 5, dadurch gekennzeichnet, daß die Ausgleichsgewichte (1, 2; 21, 22; 53, 54) an außenliegenden Flanschen (15, 16; 17, 18; 45; 51, 52) der drehbaren Lagerbuchsen (7, 8; 19, 20; 49, 50) befestigt sind.

7. Vorrichtung nach einem der Ansprüche 1 bis 6, dadurch gekennzeichnet, daß das jeweils eine Ausgleichsgewicht (21, 22) zusätzlich am jeweils anderen Ausgleichsgewicht (22, 21) drehbar gelagert ist.

8. Vorrichtung nach Anspruch 7, dadurch gekennzeichnet, daß für die jeweils zusätzliche Lagerung eine außenliegende weitere drehbare Lagerbuchse (23, 24) für jedes Ausgleichsgewicht (21, 22) vorgesehen ist.

9. Vorrichtung nach einem der Ansprüche 1 bis 8, dadurch gekennzeichnet, daß die Stellmotore längs der Rotationsachse (A) mit innen liegenden und aufeinander zu gerichteten Motorwellen (5, 6) angeordnet sind.

10. Vorrichtung nach einem der Ansprüche 1 bis 9, dadurch gekennzeichnet, daß die Ausgleichsgewichte in sich überlappende Positionen verstellbar sind.

11. Vorrichtung nach einem der Ansprüche 1 bis 10, dadurch gekennzeichnet, daß beide Stellmotore (3, 4) in einer gemeinsamen zylindrischen Halterung (55) gelagert sind und daß die zylindrische Halterung (55) an ihren beiden Enden zwei stirnseitige Lagerplatten (56, 57) mit einander verbindet, von denen die eine Lagerplatte (56) mit der Schleifscheibe drehfest verbindbar ist.

12. Vorrichtung nach Anspruch 11, dadurch gekennzeichnet, daß an den beiden stirnseitigen Lagerplatten (56, 57) jeweils mindestens ein Zahnrad (58, 59) gelagert ist, über welches die Drehung der Motorwellen (5, 6) auf die drehbare Lagerbuchse (49, 50) übertragbar ist.

13. Vorrichtung nach einem der Ansprüche 1 bis 10, dadurch gekennzeichnet, daß die Motorwellen (5, 6) über Mitnehmer (9, 10) drehfest direkt mit den drehbaren Lagerbuchsen (7, 8; 19, 20) verbunden sind.

## Claims

1. Apparatus for unbalance compensation of a grinding wheel which is rotatable about an axis of rotation, with compensating weights which are mounted on a housing rotating with the grinding wheel rotatably about the axis of rotation with respect to a grinding wheel central plane which is perpendicular to the axis of rotation with symmetrical mass distribution, and a positioning means for different angular positioning of the compensating weights, characterised in that the compensating weights (1, 2; 21, 22; 53, 54) are rotatable on different radii (R1, R2; R3, R4) through 360° about the axis of rotation (A) and are movable past each other, wherein the product of the mass of the respective compensating weight and the associated radius is of the same magnitude for each of the compensating weights.

2. Apparatus according to claim 1 characterised in that the compensating weights (1, 2; 21, 22; 53, 54) are in the form of semicylindrical shell members.

3. Apparatus according to claim 1 or claim 2 characterised in that the positioning means comprises two electric control motors (3, 4) which are arranged around the axis of rotation (A) and that the compensating weights (1, 2; 21, 22) are mounted on rotatable bearing bushes (7, 8; 19, 20; 49, 50) which each extend over the entire axial length of a respective control motor and are drivingly connected to the motor shafts (5, 6).

4. Apparatus according to one of claims 1 to 3 characterised in that each control motor (3, 4) is feed to an associated bearing bush (13, 14) which is feed with respect to the housing.

5. Apparatus according to one of claims 1 to 4 characterised in that the rotatable bearing bush (7; 19) for the one compensating weight (1; 21) is rotatably mounted on the one bearing bush (13) which is fixed with respect to the housing and the other rotatable bearing bush (8; 20) for the other compensating weight (2; 22) is rotatably mounted on the other bearing bush (14) which is fixed with respect to the housing.

6. Apparatus according to one of claims 1 to 5 characterised in that the compensating weights (1, 2; 21, 22; 53, 54) are fixed to outwardly disposed flanges (15, 16; 17, 18; 45; 51, 52) of the rotatable bearing bushes (7, 8; 19, 20; 49, 50).

7. Apparatus according to one of claims 1 to 6 characterised in that the respective one compensating weight (21, 22) is additionally rotatably mounted on the respective other compensating weight (22, 21).

8. Apparatus according to claim 7 characterised in that an outwardly disposed further rotatable bearing bush (23, 24) is provided for each compensating weight (21, 22) for respective additional mounting.

9. Apparatus according to one of claims 1 to 8 characterised in that the control motors are arranged along the axis of rotation (A) with motor shafts (5, 6) arranged internally and directed towards each other.

**10.** Apparatus according to one of claims 1 to 9 characterised in that the compensating weights are displaceable into mutually overlapping positions.

**11.** Apparatus according to one of claims 1 to 10 characterised in that both control motors (3, 4) are mounted in a common cylindrical holding means (55) and that the cylindrical holding means (55) at its two ends connects together two end mounting plates (56, 57) of which the one mounting plate (56) can be non-rotatably connected to the grinding wheel.

**12.** Apparatus according to claim 11 characterised in that at least one respective gear (58, 59) is mounted at each of the two end mounting plates (56, 57), by way of which gear the rotation of the motor shafts (5, 6) can be transmitted to the rotatable bearing bush (49, 50).

**13.** Apparatus according to one of claims 1 to 10 characterised in that the motor shafts (5, 6) are non-rotatably connected directly to the rotatable bearing bushes (7, 8; 19, 20) by way of entrainment means (9, 10).

## Revendications

**1.** Dispositif de compensation du balourd d'une meule pouvant tourner par rapport à un axe de rotation, comportant des masselottes de compensation qui sont montées sur une enveloppe solidaire en rotation de la meule, de manière à pouvoir tourner par rapport à un plan médian de la meule perpendiculaire à l'axe de rotation, la répartition des masses étant symétrique autour de l'axe de rotation, et un dispositif de positionnement pour positionner les masselottes de compensation en des emplacements angulaires différents, caractérisé en ce que les masselottes (1, 2 ; 21, 22 ; 53, 54) de compensation peuvent tourner de 360° sur des rayons (R1, R2, R3, R4) différents par rapport à l'axe (A) de rotation et peuvent être déplacées les unes devant les autres, le produit de la masse de chaque masselotte par son rayon associé étant le même pour toutes les masselottes.

**2.** Dispositif suivant la revendication 1, caractérisé en ce que les masselottes (1, 2 ; 21, 22 ; 53, 54) de compensation ont la forme d'une hemicoquille cylindrique.

**3.** Dispositif suivant la revendication 1 ou 2, caractérisé en ce que le dispositif de positionnement comporte deux moteurs (3, 4) électriques de réglage disposés autour de l'axe (A) de rotation et en ce que les masselottes (1, 2 ; 21, 22) de compensation sont montées sur des coussinets (7, 8 ; 19, 20 ; 49, 50) pouvant tourner, qui s'étendent sur toute la longueur axiale d'un moteur de réglage et sont reliées à l'arbre (5, 6) de moteur selon une liaison d'entraînement.

**4.** Dispositif suivant l'une des revendications 1 à 3, caractérisé en ce que chaque moteur (3, 4) de réglage est fixé à un coussinet (13, 14) associé fixé solidement à l'enveloppe.

**5.** Dispositif suivant l'une des revendications 1 à 4, caractérisé en ce que le coussinet (7 ; 19) pouvant tourner pour une des masselottes (1 ; 21) de compensation est monté, de manière à pouvoir tourner, sur un des coussinets (13) fixés solidement de l'enveloppe et les autre coussinets (8 ; 20) pouvant tourner pour l'autre masselotte (2 ; 22) de compensation sont montés, de manière à pouvoir tourner, sur les autres coussinets (14) fixés solidement à l'enveloppe.

**6.** Dispositif suivant l'une des revendications 1 à 5, caractérisé en ce que les masselottes (1, 2 ; 21, 22 ; 53, 54) de compensation sont fixées à des brides (15, 16 ; 17, 18 ; 45 ; 51, 52) reposant sur l'extérieur des coussinets (7, 8 ; 19, 20 ; 49, 50) pouvant tourner.

**7.** Dispositif suivant l'une des revendications 1 à 6, caractérisé en ce que chacune des masselottes (21, 22) est de plus montée de manière à pouvoir tourner sur l'autre masselotte (22, 21).

**8.** Dispositif suivant la revendication 7, caractérisé en ce qu'il est prévu, pour chaque masselotte, pour le placement des paliers supplémentaires un coussinet (23, 24) pouvant tourner supplémentaire se trouvant à l'extérieur.

**9.** Dispositif suivant l'une des revendications 1 à 8, caractérisé en ce que les arbres (5, 6) des moteurs de réglage sont disposés le long de l'axe (A) de rotation, en se trouvant à l'intérieur et en étant dirigés l'un vers l'autre.

**10.** Dispositif suivant l'une des revendications 1 à 9, caractérisé en ce que les masselottes peuvent être réglées en des positions se chevauchant mutuellement.

**11.** Dispositif suivant l'une des revendications 1 à 10, caractérisé en ce que les deux moteurs (3, 4) de réglage sont montés dans une pièce de fixation (55) cylindrique commune et en ce que la pièce de fixation (55) cylindrique relie, l'une à l'autre, deux plaques (56, 57) de palier frontales, se trouvant à ses deux extrémités, une de ces plaques (56) pouvant être reliée de manière à être solidaire en rotation à la meule.

12. Dispositif suivant la revendication 11, caractérisé en ce que au moins une roue (58, 59) dentée est montée à chacune des deux plaques (56, 57) de palier frontales, roue dentée par laquelle la rotation des arbres (5, 6) de moteur est transmise aux coussinets (49, 50) pouvant tourner.

13. Dispositif suivant l'une des revendications 1 à 10, caractérisé en ce que les arbres (5, 6) de moteur sont reliés solidaires en rotation par l'intermédiaire d'un organe d'entraînement (9, 10) directement aux coussinets (7, 8 ; 19, 20) pouvant tourner.

FIG. 1

FIG. 2

FIG. 3

FIG. 4

FIG. 5